# FASCICULE DE BREVET EUROPEEN

(11) **EP 4 408 168 B1**
(45) Date de publication et mention de la délivrance du brevet: **13.05.2026**
(21) Numéro de dépôt: 22797414.4
(22) Date de dépôt: 29.09.2022
(51) Int. Cl.: A01K 45/00, B65G 47/44

(54) **INSTALLATION POUR TRAITER DES VOLATILES NOUVELLEMENT ÉCLOS À HAUTE CADENCE**
ANLAGE ZUR HOCHGESCHWINDIGKEITSVERARBEITUNG VON NEU AUSGESCHLÜPFTEN VÖGELN
FACILITY FOR HIGH-SPEED PROCESSING OF NEWLY HATCHED BIRDS

(30) Priorité: 29.09.2021 FR 2110240
(43) Date de publication de la demande: 07.08.2024
(73) Titulaire: Egg-Chick Automated Technologies, 29400 Landivisiau (FR)
(72) Inventeur: MALET, Bertrand, 29400 LANDIVISIAU (FR); TARVYDAS, Johan, 29400 LANDIVISIAU (FR); PENGLOAN, Johann, 29400 LANDIVISIAU (FR); BOYER, William, 49124 ST BARTHELEMY D'ANJOU (FR)
(74) Mandataire: Plasseraud IP
(86) Numéro de dépôt international: PCT/FR2022/051841
(87) Numéro de publication internationale: WO 2023/052731

(56) Documents cités:
- CN-A- 113 349 100
- FR-A1- 2 885 030
- JP-A- H06 245 662
- US-A1- 2018 343 830

## Description

### Domaine technique

La présente invention concerne une installation pour traiter des volatiles nouvellement éclos, notamment des poussins, à haute cadence.

### Technique antérieure

Il est connu dans le domaine de l'aviculture, de manipuler des poussins, dès leur premier jour pour la réalisation de diverses opérations telles que leur pesée, apprécier leur état de santé mais également injecter une ou plusieurs substances vétérinaires, par exemple des vaccins par voie sous-cutanée.

Dans certaines opérations, les poussins sont manipulés manuellement, ce qui nécessite de la part de l'opérateur non seulement, les connaissances mais également la pratique, essentielles à la minimisation du stress de l'animal vivant.

Les poussins d'un même lot, par exemple celui constitué par un contenant acheminé par convoyeur, sont alors typiquement traités sur une même station de travail par un seul opérateur qui place au fur et à mesure, les poussins qu'il traite dans un autre contenant en vue de leur évacuation.

Toutefois, on constate que, quelle que soit la dextérité de cet opérateur, le temps nécessaire au traitement d'un tel lot d'animaux vivants est relativement long.

Ainsi, et alors que de nombreux efforts ont été accomplis ces dernières années, pour augmenter de manière significative les cadences de traitement des œufs à couver, avec des chiffres pouvant atteindre aujourd'hui typiquement 90 000 œufs à l'heure et plus, les cadences de traitement de poussins nouvellement éclos restent encore faibles.

De plus, on constate que la conception des installations pour le traitement des poussins, qui comporte systématiquement des changements de direction, amène les poussins à subir des stress importants, voire à être sujets à des ecchymoses et traumatismes squelettiques durant leur transport.

Or, le respect des normes de bien-être animal est aujourd'hui un enjeu majeur dans tous les segments de l'industrie d'élevage.

On constate également trop fréquemment des problèmes de santé dans le personnel travaillant sur ces installations, tels que l'apparition de troubles musculo-squelettiques (TMS).

Par ailleurs, il est connu d'administrer à des poussins à un jour d'âge, ou entre un (1) et cinq (5) jours d'âge, des vaccins pour immuniser ces animaux contre diverses maladies durant les premiers jours de leur vie.

Ces vaccinations sont nécessaires non seulement pour assurer une bonne santé de ces animaux vivants, mais également pour garantir des productions adéquates.

Afin de traiter un grand nombre de poussins simultanément, il est connu d'exposer ces poussins, disposés dans des contenants, ou paniers, en déplacement sur des convoyeurs, à de fines gouttelettes d'eau contenant le vaccin à administrer, ces gouttelettes étant obtenues par pulvérisation. La mise en contact direct de ces poussins avec le brouillard de gouttelettes assure leur vaccination par voie oculo-nasale.

Il est encore connu de faire passer ces plateaux chargés de poussins, au moyen de convoyeurs, sous des buses éjectant des gouttes de gel contenant un vaccin, ces gouttes adhérentes au contact étant par exemple colorées d'une couleur attractive pour le poussin. La vaccination des poussins est alors assurée par ingestion de gouttes de gel prélevées sur les corps des poussins environnants.

Une telle coloration permet également de s'assurer d'une prise correcte du produit par simple contrôle visuel de l'intérieur de la bouche de l'animal.

Or, pour que ces vaccinations soient efficaces, il convient d'une part que le contenant soit traité dans son intégralité, de l'avant à l'arrière de celui-ci et d'autre part, que la distribution des gouttelettes soit homogène sur l'ensemble du contenant.

Également, le même volume de vaccin doit être appliqué en continu à chaque contenant.

Or, l'alimentation des buses avec une dose de vaccin à distribuer sur un contenant étant réalisée à partir d'un volume de stockage prédéterminé, tel que le volume d'une seringue, il en résulte que les contenants ne peuvent pas défiler en continu sous les appareils de distribution de gouttelettes de fluide.

JP H06 245662 A divulgue une installation pour traiter des volatiles, ladite installation ayant une extrémité amont et une extrémité aval, ladite installation comprenant au moins un premier convoyeur définissant un axe de convoyage le long duquel sont disposés plusieurs postes de traitement, ledit au moins un premier convoyeur ayant une extrémité amont et une extrémité aval, et au moins chacun desdits postes de traitement identiques comportant un toboggan.

Il existe donc un besoin pressant pour une unité de traitement de volatiles nouvellement éclos, notamment de poussins, dont la conception originale permette de surmonter les inconvénients de l'art antérieur exposés ci-dessus.

### Objet de l'invention

La présente invention vise à pallier les inconvénients de l'art antérieur en proposant une installation pour traiter des volatiles nouvellement éclos, tels que des poussins, simple dans sa conception et dans son mode opératoire, assurant des cadences rapides, typiquement supérieures à 12 000 volatiles à l'heure et plus.

Un autre objet de la présente invention est une telle installation pour traiter des volatiles nouvellement éclos respectant le bien-être de ces animaux vivants.

Encore un objet de la présente invention est une telle installation pour traiter des volatiles nouvellement éclos permettant de réduire les risques pour les opérateurs de développer des troubles musculo-squelettiques (TMS).

Encore un objet de la présente invention est une telle installation pour traiter des volatiles nouvellement éclos permettant de gérer des contenants transportés par un convoyeur pour exposer leur surface à des gouttelettes d'un ou plusieurs fluides vétérinaires et garantir un traitement homogène de tous les volatiles contenus dans ces contenants.

### Exposé de l'invention

A cet effet, l'invention est définie par la revendication 1 et concerne une installation pour traiter des volatiles nouvellement éclos à haute cadence, ladite installation ayant une extrémité amont et une extrémité aval, ladite installation étant destinée à recevoir à son extrémité amont des premiers contenants dans lesquels sont placés lesdits volatiles vivants nouvellement éclos.
Selon l'invention,
- ladite installation comprend au moins un premier convoyeur linéaire, lequel définit un axe de convoyage le long duquel sont disposés plusieurs postes de traitement, ledit premier convoyeur ayant une extrémité amont et une extrémité aval,
- au moins certains desdits postes de traitement étant identiques afin que les volatiles d'un même premier contenant, en déplacement entre lesdites extrémités amont et aval dudit au moins un premier convoyeur puissent recevoir un même traitement en étant partagés sur les différents postes de traitement identiques,
- au moins chacun desdits postes de traitement identiques comportant un toboggan pour acheminer des volatiles ainsi traités desdits postes de traitement correspondant vers des seconds contenants,
- ladite installation comportant des supports fixes pour supporter lesdits seconds contenants, lesquels sont disposés en-dessous dudit premier convoyeur correspondant, lesdits supports étant de plus placés de niveau avec ou sensiblement de niveau d'un second convoyeur situé sous ledit premier convoyeur correspondant, de sorte que chaque second contenant puisse être déplacé lorsqu'il est plein, depuis son support fixe vers ledit second convoyeur en vue de son évacuation.

La conception originale de cette installation permet par la répartition du traitement de poussins nouvellement éclos sur plusieurs postes identiques, d'atteindre des cadences très rapides, typiquement supérieures à 12 000 poussins à l'heure et plus, tout en étant plus sûr pour ceux-ci.

On constate, de plus, que les poussins sont soumis à moins de mouvements, moins de chocs, et sont, par conséquent, moins stressés. Or, des études ont démontré que le stress chez un poussin pouvait rendre sa vaccination moins efficace.

On entend ici par « volatile », toute espèce aviaire, telle que des oiseaux de la classe des Aves, c'est-à-dire des animaux vertébrés qui sont à plumes, ailés, bipèdes, endothermiques (à sang chaud) et aptes à pondre.
Dans le contexte de la présente invention, les volatiles réfèrent plus particulièrement aux oiseaux ayant un intérêt économique et/ou agronomiques, tels que des volailles (par exemple, des poulets, des dindes, des poules, des pintades, des cailles, des perdrix et des pigeons), des oiseaux migrateurs (par exemple, des canards et des oies) et des oiseaux d'ornement (par exemple, des cygnes, des perroquets et des psittacidés).

Les premiers et seconds convoyeurs sont des convoyeurs linéaires pour déplacer lesdits contenants, lesquels définissent des axes de convoyage. Par exemple, ces convoyeurs sont des convoyeurs à bande ou à rouleaux.

De manière connue, on définira les termes « amont » et « aval » en regard du sens de déplacement des plateaux sur le convoyeur, les plateaux se déplaçant bien entendu d'amont en aval.

De préférence, l'extrémité aval dudit second convoyeur est placée après l'extrémité aval dudit premier convoyeur pour décaler la sortie de ladite installation par rapport audit premier convoyeur.

De manière avantageuse, le nombre de postes de traitement identiques comportant un toboggan est déterminé de sorte que l'ensemble des volatiles situés dans un premier contenant, placé à l'extrémité amont dudit premier convoyeur, est intégralement traité lors de son arrivée à ladite extrémité aval dudit premier convoyeur.

En fonction du nombre de postes de traitement identiques que contient la présente installation, la cadence observée peut atteindre 50 000 volatiles vivants / heure et plus.

Les toboggans sont disposés latéralement au premier convoyeur. Selon un mode de réalisation particulier de cette installation pour traiter des volatiles nouvellement éclos à haute cadence, elle comprend au moins deux premiers convoyeurs disposés parallèlement l'un à l'autre.

De préférence ces postes de traitement sont placés en regard.

De préférence, lesdits premiers convoyeurs sont espacés d'une distance telle que ladite installation comporte un seul second convoyeur situé sous lesdits premiers convoyeurs.
On obtient ainsi avantageusement une installation plus compacte et donc moins encombrante.

Selon un autre mode de réalisation particulier de cette installation pour traiter des volatiles nouvellement éclos à haute cadence, la largeur dudit premier convoyeur est déterminée de sorte que des volatiles transportés dans un contenant passant au droit d'un opérateur placé à un desdits postes de traitement sont accessibles pour leur préhension sans que cet opérateur n'ait à tendre son bras.

De manière avantageuse, ledit premier convoyeur est placé à une hauteur d'au moins 800 mm, et encore mieux à une hauteur d'au moins 900 mm par rapport à un sol plan recevant ladite installation. Par exemple, cette hauteur peut être comprise entre 800 mm et 1100 mm.

Selon encore un autre mode de réalisation particulier de cette installation pour traiter des volatiles nouvellement éclos à haute cadence, l'extrémité amont de ladite installation est destinée à recevoir des premiers contenants comportant des volatiles nouvellement éclos et des débris à trier issus de l'éclosion afin de permettre la séparation manuelle de ces volatiles et de ces débris.

Selon encore un autre mode de réalisation particulier de cette installation pour traiter des volatiles nouvellement éclos à haute cadence, chacun des postes de traitement identiques comprend un dispositif pour injecter au moins un produit vétérinaire à des volatiles et autres oiseaux semblables.

Selon encore un autre mode de réalisation particulier de cette installation pour traiter des volatiles nouvellement éclos à haute cadence, chaque tobogan présente une extrémité supérieure ouverte et une extrémité inférieure conformée pour définir une arrivée avec une pente douce débouchant sur un second contenant placé sur son support fixe.

Selon encore un autre mode de réalisation particulier de cette installation pour traiter des volatiles nouvellement éclos à haute cadence, elle comporte des moyens d'acheminement de seconds contenants vides pour alimenter chacun des postes de traitement identiques.

De préférence, lesdits moyens d'acheminement sont constitués par un convoyeur linéaire incliné à rouleaux, lequel permet de faire glisser par gravité des seconds contenants vides le long de son axe de déplacement.

Ledit au moins un premier convoyeur qui achemine les volatiles présente une vitesse de convoyage constante comprise entre dix (10) et vingt (20) m/min en fonction de la cadence désirée en fonction de la cadence désirée. De préférence, cette vitesse de convoyage est de quinze (15) m/min. Typiquement, ladite installation est configurée pour présenter une cadence d'au moins 12 000 volatiles/h, et encore mieux 50 000 volatiles/h.

De préférence, la vitesse de convoyage est déterminée de sorte que la durée de déplacement d'un lot de poussins au niveau d'un poste de traitement est supérieure ou égale à la durée de la phase opérationnelle de traitement sur ledit poste de traitement correspondant.

Ainsi lorsque cette durée de déplacement est supérieure à la durée de la phase opérationnelle de traitement sur le poste de traitement correspondant, le même opérateur a la possibilité de saisir manuellement et de traiter plus d'un volatile vivant provenant d'un même premier contenant.

Selon encore un autre mode de réalisation particulier de cette installation pour traiter des volatiles nouvellement éclos à haute cadence, elle comprend un dispositif de détection de remplissage du contenant, lequel émet des signaux de mesure qui sont traités par une unité de traitement, ladite unité de traitement étant reliée à un dispositif d'alarme pour émettre un signal de fin de remplissage et/ou déplacer un volet de fin de course placé à l'extrémité du toboggan, le déplacement dudit volet permettant audit toboggan d'adresser un volatile glissant le long de celui-ci vers un second contenant différent.

A titre purement illustratif, le dispositif de détection de remplissage du contenant est un dispositif optique configuré pour visualiser l'ensemble du contenant.

Par exemple, l'unité de traitement est un microprocesseur. Elle comprend un logiciel adapté pour déterminer à partir des images acquises par le dispositif de détection le taux de remplissage du second contenant imagé.

Il est encore possible d'utiliser le système de comptage du dispositif pour injecter au moins un produit vétérinaire à des volatiles et autres oiseaux semblables, pour piloter le remplissage des contenants. Un protocole de communication sans fil tel que Zigbee, permet à l'installation d'avoir accès au compteur de vaccination du dispositif pour injecter au moins un produit vétérinaire.

De préférence, ladite unité de traitement adresse un signal et/ou fait pivoter un volet de fin de course lorsque le remplissage dudit contenant atteint au moins 90%, et encore mieux au moins 95% de sa contenance maximale.

De manière avantageuse, elle comprend au niveau de chaque support fixe destiné à recevoir un second contenant, un dispositif de déplacement d'un second contenant de son support fixe vers une zone de chargement sur ledit second convoyeur dans laquelle ledit second contenant ainsi déplacé est entrainé par ledit second convoyeur.

A titre d'exemple, ce dispositif de déplacement d'un second contenant est un mécanisme d'entrainement du second contenant tel qu'une bande sans fin ou un poussoir mobile entre une position de repos et une position déployée dans laquelle il se trouve placé dans ladite zone de chargement du second convoyeur.

De manière avantageuse, cette installation comprend en outre au moins un capteur de présence configuré pour détecter la présence d'un second contenant dans la zone de chargement lors du déplacement d'un second contenant de son support fixe vers le second convoyeur, ce second capteur de présence étant de plus configuré pour arrêter ledit second convoyeur ou ralentir ledit second convoyeur lorsqu'un second contenant est déjà présent dans ladite zone de chargement.
De préférence, ce capteur de présence est une cellule photoélectrique.

Selon encore un autre mode de réalisation particulier de cette installation pour traiter des volatiles nouvellement éclos à haute cadence, elle comporte un dispositif de pulvérisation d'au moins un fluide tel qu'un vaccin, ledit dispositif de pulvérisation étant placé à l'extrémité aval dudit second convoyeur pour distribuer des gouttelettes de fluide sur les volatiles nouvellement éclos se déplaçant dans des seconds contenants, ladite installation comprenant de plus un système de gestion des seconds contenants en déplacement sur ledit second convoyeur, ledit système de gestion étant configuré pour garantir le traitement d'un seul second contenant à la fois par ledit dispositif de pulvérisation. Avantageusement, ce système de gestion des contenants placé en amont du dispositif de pulvérisation garantit qu'un seul contenant est placé à la fois sous le dispositif de pulvérisation pour le traitement de son contenu. On s'assurer ainsi qu'il n'y a pas de gaspillage de fluide vétérinaire, tout en garantissant un traitement efficient de chaque contenant.

Selon encore un autre mode de réalisation particulier de cette installation pour traiter des volatiles nouvellement éclos à haute cadence, ledit système de gestion comporte une unité de contrôle et deux paires de bloqueurs actionnées par des actionneurs pour freiner deux seconds contenants immédiatement adjacents sur ledit second convoyeur et placés en amont dudit dispositif de pulvérisation d'un fluide.
Par exemple, chaque actionneur est un vérin hydraulique permettant de déplacer un bloqueur d'une position inactive à une position active.

Selon encore un autre mode de réalisation particulier de cette installation pour traiter des volatiles nouvellement éclos à haute cadence, ledit dispositif de pulvérisation comprend un circuit d'alimentation en fluide comportant une seringue.
Le volume de cette seringue détermine avantageusement la dose de fluide à distribuer sous forme de gouttelettes par le dispositif de pulvérisation.

Selon encore un autre mode de réalisation particulier de cette installation pour traiter des volatiles nouvellement éclos à haute cadence, ledit dispositif de pulvérisation comporte au moins une station de pulvérisation comprenant plusieurs buses de pulvérisation, lesdites buses de chaque station étant agencées pour distribuer un fluide sous forme de gouttelettes vers la surface d'un second contenant acheminé par ledit second convoyeur sous ladite station.
A titre purement illustratif, ce dispositif de pulvérisation peut comporter deux stations de pulvérisation distincte, une première de ces stations étant configurée pour délivrer un brouillard de gouttelettes d'un liquide à pulvériser et la seconde station étant configurée pour distribuer des gouttelettes d'un gel tel qu'un gel mou ou un fluide ayant une viscosité comprise entre 50 et 2000 cps à 20°C.
Au niveau de chacune de ces stations, les gouttelettes délivrées sont avantageusement de taille uniforme ou sensiblement uniforme.
A titre purement illustratif, le premier fluide est une composition aqueuse contenant un vaccin.
Ce gel peut comporter un agent colorant pour contrôler visuellement la répartition uniforme des gouttes sur le plateau ouvert

### Brève description des dessins

D'autres avantages, buts et caractéristiques particulières de la présente invention ressortiront de la description qui va suivre, faite, dans un but explicatif et nullement limitatif, en regard des dessins annexés, dans lesquels:
**Fig. 1**

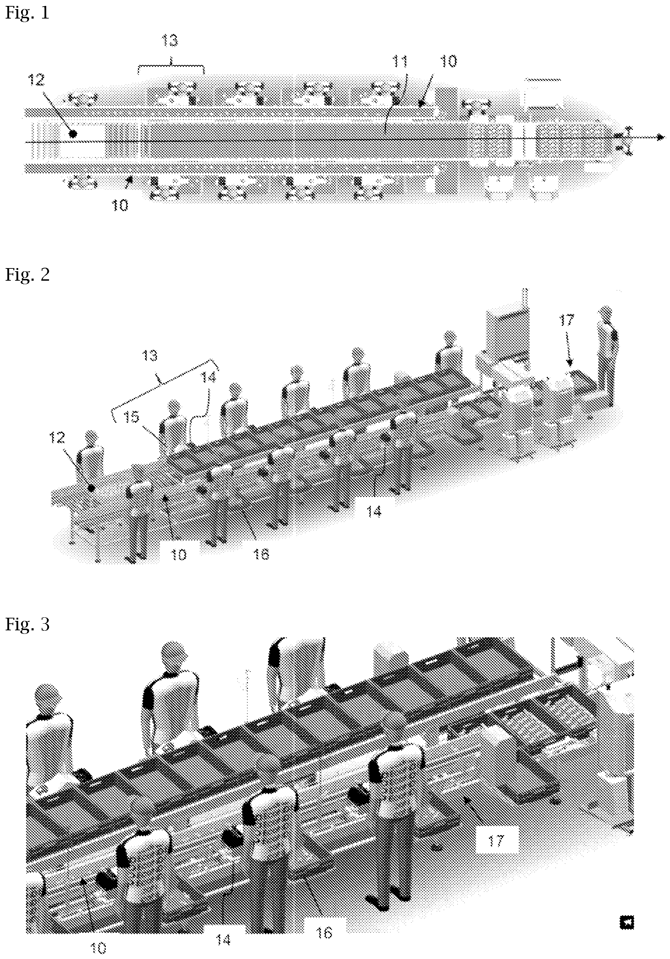

   [Fig. 1] est une représentation schématique et en vue de dessus d'une installation pour traiter des poussins selon un mode de réalisation particulier de la présente invention, cette installation comprenant ici huit (8) postes de traitement identiques ;
**Fig. 2**
   [Fig. 2] est une vue en perspective de l'installation de traitement de la Fig. 1 ;
**Fig. 3**
   [Fig. 3] est une vue élargie de l'extrémité amont de l'installation de traitement de la Fig. 1 montrant la zone de tri des plateaux provenant des éclosoirs et les premiers postes identiques de vaccination des poussins nouvellement éclos ;
**Fig. 4**

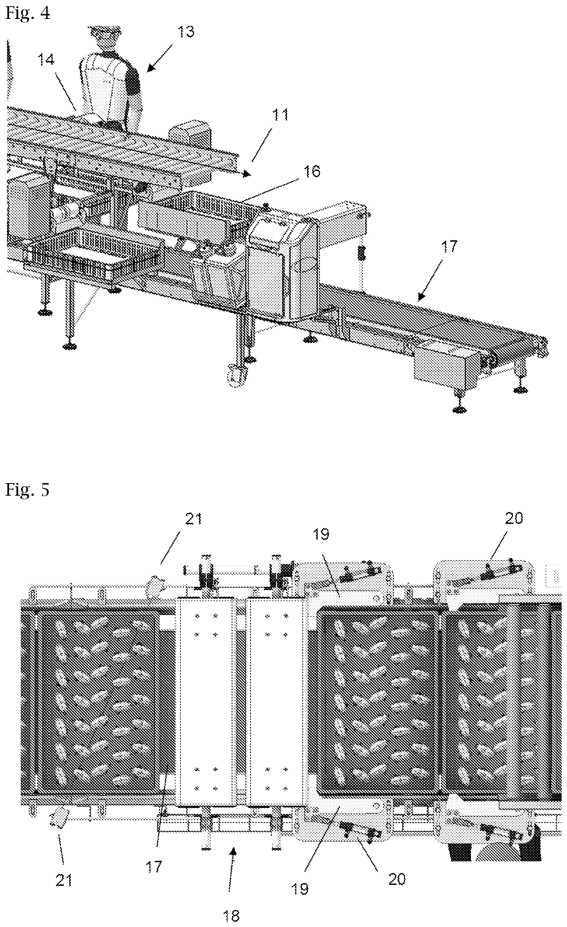

   [Fig. 4] est une vue partielle et élargie de l'extrémité aval de l'installation de traitement de la Fig. 1 montrant la sortie de l'installation ;
**Fig. 5**
   [Fig. 5] est une vue de dessus de l'extrémité aval du second convoyeur dans une installation pour traiter des poussins selon un autre mode de réalisation de la présente invention, cette installation comportant un système de gestion des plateaux pour assurer un traitement uniforme des poussins dans chaque plateau par un dispositif de pulvérisation ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 4 illustrent de manière schématique une installation pour traiter des poussins à haute cadence selon un mode de réalisation particulier de la présente invention.

Cette installation comporte deux premiers convoyeurs 10 ayant une extrémité amont et une extrémité aval, ces premiers convoyeurs 10 étant destinés à recevoir à leur extrémité amont des poussins provenant de premiers contenants, ou paniers, dans lesquels les poussins nouvellement éclos, à traiter sont placés pour assurer leur transport.

Ces premiers convoyeurs 10 qui sont linéaires, définissent un axe de convoyage 11 le long duquel sont disposés plusieurs postes de traitement et devant lesquels sont déplacés les poussins.

Ces premiers convoyeurs 10 étant uniquement linéaires, les poussins sont soumis à un stress moindre qu'avec les installations de l'état de l'art.

A l'extrémité amont de l'installation, sont placés deux postes de traitement se faisant face, lesquels définissent une zone de tri manuel 12 des paniers.

En effet, après l'éclosion, les paniers contiennent non seulement des poussins mais également des œufs clairs, c'est-à-dire des œufs non fécondés, des œufs non éclos, c'est-à-dire des œufs contenant des embryons morts et des morceaux de coquilles de diverses tailles.

Du personnel est donc nécessaire pour trier manuellement les paniers et retirer un maximum de déchets, notamment les œufs non éclos ou non fécondés qui risqueraient autrement d'exploser ultérieurement dans le panier.

Après ces premiers postes de tri, sont disposés huit postes de traitement identiques 13, lesquels sont répartis par paire en définissant chacune une zone de prise en charge des poussins en défilement sur les premiers convoyeurs 10.

Le nombre de postes de traitement identiques 13 garantit que l'ensemble des poussins provenant d'un même panier et en déplacement entre lesdites extrémités amont et aval de ces premiers convoyeurs 10 recevront un même traitement.

Les poussins provenant d'un même panier sont ainsi transportés par les premiers convoyeurs 10 de sorte qu'à leur passage devant dans une zone de prise en charge, les opérateurs des postes de traitement identiques 13 correspondants saisissent un certain nombre de poussins, un à la fois, pour leurs injecter un vaccin.

Lorsque le restant des poussins provenant du même panier s'éloigne pour se diriger vers la zone de prise en charge immédiatement suivante et située en aval, les opérateurs cessent de s'occuper de ces poussins pour traiter des poussins provenant d'un nouveau panier et arrivant à leur portée dans leur zone de prise en charge.

Ces postes de traitement identiques 13 qui sont placés latéralement aux premiers convoyeurs en étant disposés en vis-à-vis, sont ici configurés pour l'administration d'un médicament ou d'un vaccin par injection.

Chaque poste de traitement comprend ainsi un appareil 14 pour administrer un médicament ou un vaccin à un poussin par injection par voie sous-cutanée.

Chacun de ces postes de traitement identiques 13 comporte de plus un toboggan 15 pour acheminer des poussins ainsi traités du poste de traitement correspondant vers un second panier 16.

La goulotte du toboggan 15 dans laquelle est introduit le poussin présente avantageusement une dimension adaptée pour éviter/limiter la chute du poussin.

Chacun des appareils 14 pour administrer un traitement ou un vaccin à un poussin peut de plus être relié par un réseau radio avec l'automate pour avoir accès au nombre d'injections réalisées et gérer le taux de remplissage en complément des capteurs de comptage dans les toboggans 15.

L'installation comporte des supports fixes (non représentés) pour supporter ces seconds paniers 16, lesquels sont placés en-dessous du premier convoyeur 10.

Ces supports fixes sont de plus placés de niveau avec ou sensiblement de niveau avec un second convoyeur 17 situé sous le premier convoyeur 10, de sorte que chaque second panier lorsqu'il est rempli puisse être déplacé, depuis son support fixe vers ledit second convoyeur 17 en vue de son évacuation.

La Figure 5 est une vue de dessus de l'extrémité aval du second convoyeur 17 dans une installation pour traiter des poussins selon un autre mode de réalisation de la présente invention.

Les éléments de l'installation de traitement de la Fig. 5 portant les mêmes références que celles de l'installation de traitement illustrée aux Figures 1 à 4 représentent les mêmes objets, lesquels ne seront pas décrits de nouveau ci-après.

L'installation de la Fig. 5 diffère de celle représentée aux Figures 1 à 4 en ce qu'elle comporte une rampe de pulvérisation 18 et un système de gestion des paniers transportés sur le second convoyeur 17, ce système permettant de réguler les paniers afin de garantir un traitement homogène des poussins dans chaque panier par la rampe de pulvérisation 18.

Cette rampe comporte une pluralité de buses de pulvérisation pour distribuer des gouttelettes de fluide, lesquelles sont montées au-dessus de la bande du second convoyeur 17.

Ces buses de pulvérisation sont alimentées par un circuit d'alimentation comprenant une seringue pour définir une dose d'un fluide à distribuer tel qu'un vaccin.

La seringue est alimentée par un contenant de vaccin muni d'un mécanisme agitateur pour mélanger le vaccin et le diluant par une agitation contrôlée.

Compte tenu du fait que le remplissage de cette seringue prend un certain temps, les paniers ne peuvent pas défiler en continu sous la rampe de pulvérisation 18.

L'installation de traitement comprend donc deux paires de bloqueurs disposées latéralement au second convoyeur 17, chaque bloqueur 19 étant actionné par un actionneur 20, ici un vérin pneumatique.

Ces paires de bloqueurs sont agencées de sorte que chaque paire de bloqueurs ralentit, ou encore freine, un panier en déplacement sur le second convoyeur 17. Ces paires de bloqueurs étant espacées de sorte que deux paniers immédiatement adjacents, ou encore placés l'un derrière l'autre, sur le tapis du second convoyeur 17 sont arrêtés.

Le déplacement de ces paires de bloqueurs entre leur position inactive, ou en retrait, et active, ou de blocage, est géré par deux (2) paires de capteurs optoélectriques 21, situés avant et après la rampe de pulvérisation 18.

La paire de premiers capteurs placés en amont de, ou devant, la rampe de pulvérisation 18 dans le sens de défilement des paniers sert à la détection du premier panier, commandant ainsi l'ouverture de la première paire de bloqueurs.

La deuxième paire de bloqueurs agit de manière inversée, c'est-à-dire que celle-ci est fermée, lorsque la première paire de bloqueurs est ouverte, et inversement.

La deuxième paire de capteurs sert à détecter la saturation de la ligne, pour qu'aucun panier ne reste immobilisé sous la rampe de pulvérisation 18, risquant ainsi de recevoir trop de vaccin.

Selon le type de panier, la configuration des bloqueurs/capteurs ainsi que leur type peuvent varier.

En fonctionnement, un premier panier arrive en butée sur la première paire de bloqueurs, la première paire de capteurs placés avant la rampe de pulvérisation 18 donne l'information qu'un panier est disponible et en attente.

Si la rampe de vaccination est prête, c'est-à-dire que sa seringue est remplie, une information est donnée et la première paire de bloqueurs passent en position inactive, c'est-à-dire qu'elle s'ouvre pour laisser passer le panier.

Dans le même temps, la deuxième paire de bloqueurs se ferme pour bloquer le panier transporté par le second convoyeur 17 qui vient après le premier panier.

Une fois que le premier panier a dépassé la première paire de capteurs situés en amont de la rampe de pulvérisation 18, les bloqueurs de la première paire passent de leur position inactive à active, c'est-à-dire que la première paire de bloqueurs se referme et la deuxième paire de bloqueurs se ré-ouvre, ou passe en position inactive, et le cycle recommence.

Si la paire de capteurs 21 placés en sortie de pulvérisateur détecte un panier immobilisé, le système se bloque, empêchant qu'un panier reste sous la rampe de pulvérisation 18.

## Revendications

1. Installation pour traiter des volatiles nouvellement éclos à haute cadence, ladite installation ayant une extrémité amont et une extrémité aval, ladite installation étant destinée à recevoir à son extrémité amont des premiers contenants dans lesquels sont placés lesdits volatiles vivants nouvellement éclos,
- ladite installation comprenant au moins un premier convoyeur (10) pour transporter lesdits premiers contenants, le ou les premiers convoyeurs étant uniquement linéaires, ledit au moins un premier convoyeur définissant un axe de convoyage (11) le long duquel sont disposés plusieurs postes de traitement (13), ledit au moins un premier convoyeur (10) ayant une extrémité amont et une extrémité aval,
- au moins certains desdits postes de traitement étant identiques afin que les volatiles d'un même premier contenant, en déplacement entre lesdites extrémités amont et aval dudit au moins un premier convoyeur (10) puissent recevoir un même traitement en étant partagés sur les différents postes de traitement identiques (13),
- au moins chacun desdits postes de traitement identiques (13) comportant un toboggan (15) pour acheminer des volatiles ainsi traités desdits postes de traitement correspondant vers des seconds contenants (16),
ladite installation étant **caractérisée en ce que** :
- ladite installation comporte des supports fixes pour supporter lesdits seconds contenants, lesquels sont disposés en-dessous dudit premier convoyeur (10) correspondant, lesdits supports étant de plus placés de niveau avec ou sensiblement de niveau d'un second convoyeur (17) situé sous ledit premier convoyeur (10) correspondant, de sorte que chaque second contenant puisse être déplacé lorsqu'il est plein, depuis son support fixe vers ledit second convoyeur (17) en vue de son évacuation, et **en ce que**
- ledit au moins un premier convoyeur (10) qui achemine les volatiles présente une vitesse de convoyage constante comprise entre 10 et 20 m/min en fonction de la cadence désirée.

2. Installation pour traiter des volatiles selon la revendication 1, **caractérisée en ce qu'**elle comprend au moins deux premiers convoyeurs (10) disposés parallèlement l'un à l'autre.

3. Installation pour traiter des volatiles selon la revendication 2, **caractérisée en ce que** lesdits premiers convoyeurs sont espacés d'une distance telle que ladite installation comporte un seul second convoyeur situé sous lesdits premiers convoyeurs (10).

4. Installation pour traiter des volatiles selon l'une quelconque des revendications 1 à 3, **caractérisée en ce que** l'extrémité amont de ladite installation est destinée à recevoir des premiers contenants comportant des volatiles nouvellement éclos et des débris à trier issus de l'éclosion afin de permettre la séparation manuelle de ces volatiles et de ces débris.

5. Installation pour traiter des volatiles selon l'une quelconque des revendications précédentes, **caractérisée en ce que** chacun des postes de traitement identiques (13) comprend un dispositif pour injecter au moins un produit vétérinaire à des volatiles et autres oiseaux semblables.

6. Installation pour traiter des volatiles selon l'une quelconque des revendications précédentes, **caractérisée en ce que** chaque tobogan (15) présente une extrémité supérieure ouverte et une extrémité inférieure conformée pour définir une arrivée avec une pente douce débouchant sur un second contenant placé sur son support fixe.

7. Installation pour traiter des volatiles selon l'une quelconque des revendications précédentes, **caractérisée en ce qu'**elle comporte des moyens d'acheminement de seconds contenants vides pour alimenter chacun des postes de traitement identiques (13).

8. Installation pour traiter des volatiles selon la revendication 7, **caractérisée en ce que** lesdits moyens d'acheminement sont constitués par un convoyeur linéaire incliné à rouleaux, lequel permet de faire glisser par gravité des seconds contenants vides le long de son axe de déplacement.

9. Installation pour traiter des volatiles selon l'une quelconque des revendications précédentes, **caractérisée en ce qu'**elle comprend un dispositif de détection de remplissage du contenant, lequel émet des signaux de mesure qui sont traités par une unité de traitement, ladite unité de traitement étant reliée à un dispositif d'alarme pour émettre un signal de fin de remplissage et/ou déplacer un volet de fin de course placé à l'extrémité du toboggan (15), le déplacement dudit volet permettant audit toboggan (15) d'adresser un volatile glissant le long de celui-ci vers un second contenant différent.

10. Installation pour traiter des volatiles selon la revendication précédente, **caractérisée en ce que** ladite unité de traitement adresse un signal et/ou fait pivoter un volet de fin de course lorsque le remplissage dudit contenant atteint au moins 90%, et encore mieux au moins 95% de sa contenance maximale.

11. Installation pour traiter des volatiles selon l'une quelconque des revendications précédentes, **caractérisée en ce qu'**elle comporte un dispositif de pulvérisation (18) d'au moins un fluide, ledit dispositif de pulvérisation (18) étant placé à l'extrémité aval dudit second convoyeur (17) pour distribuer des gouttelettes de fluide sur les volatiles nouvellement éclos se déplaçant dans des seconds contenants, et **en ce qu'**elle comprend un système de gestion des seconds contenants en déplacement sur ledit second convoyeur (17), ledit système de gestion étant configuré pour garantir le traitement d'un seul second contenant à la fois par ledit dispositif de pulvérisation (18).

12. Installation pour traiter des volatiles selon la revendication précédente, **caractérisée en ce que** ledit système de gestion comporte une unité de contrôle et deux paires de bloqueurs (19) actionnées par des actionneurs (20) pour freiner deux seconds contenants immédiatement adjacents sur ledit second convoyeur (17) et placés en amont dudit dispositif de pulvérisation (18) d'un fluide.

13. Installation pour traiter des volatiles selon la revendication 11 ou 12, **caractérisée en ce que** ledit dispositif de pulvérisation (18) comprend un circuit d'alimentation en fluide comportant une seringue.

14. Installation pour traiter des volatiles selon l'une quelconque des revendications 11 à 13, **caractérisée en ce que** ledit dispositif de pulvérisation (18) comporte au moins une station de pulvérisation comprenant plusieurs buses de pulvérisation, lesdites buses de chaque station étant agencées pour distribuer un fluide sous forme de gouttelettes vers la surface d'un second contenant acheminé par ledit second convoyeur (17) sous ladite station.

## Patentansprüche

1. Anlage zum Behandeln von frisch geschlüpften Geflügeltieren mit hoher Taktrate, wobei die Anlage ein stromaufwärtiges Ende und ein stromabwärtiges Ende aufweist, wobei die Anlage dazu bestimmt ist, an ihrem stromaufwärtigen Ende erste Behälter zu empfangen, in die die frisch geschlüpften lebenden Geflügeltiere platziert sind,
- wobei die Anlage mindestens einen ersten Förderer (10) zum Transportieren der ersten Behälter umfasst, wobei der oder die ersten Förderer ausschließlich linear sind, wobei der mindestens eine erste Förderer eine Förderachse (11) definiert, entlang derer mehrere Behandlungsstationen (13) angeordnet sind, wobei der mindestens eine erste Förderer (10) ein stromaufwärtiges Ende und ein stromabwärtiges Ende aufweist,
- wobei mindestens gewisse der Behandlungsstationen identisch sind, damit die Geflügeltiere eines gleichen ersten Behälters, der sich zwischen den stromaufwärtigen und stromabwärtigen Enden des mindestens einen ersten Förderers (10) bewegt, eine gleiche Behandlung erhalten können, indem sie auf die verschiedenen identischen Behandlungsstationen (13) aufgeteilt werden,
- wobei mindestens jede der identischen Behandlungsstationen (13) eine Rutsche (15) umfasst, um derart behandelte Geflügeltiere von den entsprechenden Behandlungsstationen zu zweiten Behältern (16) zu befördern, wobei die Anlage **dadurch gekennzeichnet, dass:**
- die Anlage feste Träger zum Tragen der zweiten Behälter umfasst, die unterhalb des entsprechenden ersten Förderers (10) angeordnet sind, wobei die Träger ferner auf Höhe oder im Wesentlichen auf Höhe eines zweiten Förderers (17) platziert sind, der sich unter dem entsprechenden ersten Förderer (10) befindet, so dass jeder zweite Behälter, wenn er voll ist, im Hinblick auf seine Aussiedlung von seinem festen Träger zu dem zweiten Förderer (17) bewegt werden kann, und dadurch, dass
- der mindestens eine erste Förderer (10), der die Geflügeltiere befördert, in Abhängigkeit von der gewünschten Taktrate eine konstante Fördergeschwindigkeit zwischen 10 und 20 m/min aufweist.

2. Anlage zum Behandeln von Geflügeltieren nach Anspruch 1,
**dadurch gekennzeichnet, dass** sie mindestens zwei erste Förderer (10) umfasst, die parallel zueinander angeordnet sind.

3. Anlage zum Behandeln von Geflügeltieren nach Anspruch 2,
**dadurch gekennzeichnet, dass** die ersten Förderer in einem derartigen Abstand angeordnet sind, dass die Anlage einen einzigen zweiten Förderer umfasst, der unter den ersten Förderern (10) angeordnet ist.

4. Anlage zum Behandeln von Geflügeltieren nach einem der Ansprüche 1 bis 3, **dadurch gekennzeichnet, dass** das stromaufwärtige Ende der Anlage dazu bestimmt ist, erste Behälter zu empfangen, die frisch geschlüpfte Geflügeltiere und aus dem Schlüpfen stammende zu sortierende Rückstände umfassen, um die manuelle Trennung dieser Geflügeltiere und dieser Rückstände zu ermöglichen.

5. Anlage zum Behandeln von Geflügeltieren nach einem der vorstehenden Ansprüche, **dadurch gekennzeichnet, dass** jeder der identischen Behandlungsplätze (13) eine Vorrichtung zum Injizieren mindestens eines Veterinärprodukts in Geflügeltiere und andere ähnliche Vögel umfasst.

6. Anlage zum Behandeln von Geflügeltieren nach einem der vorstehenden Ansprüche, **dadurch gekennzeichnet, dass** jede Rutsche (15) ein offenes oberes Ende und ein unteres Ende aufweist, das so geformt ist, dass es eine Ankunft mit einer sanften Neigung definiert, die in einen zweiten Behälter mündet, der auf seiner festen Halterung platziert ist.

7. Anlage zum Behandeln von Geflügeltieren nach einem der vorstehenden Ansprüche, **dadurch gekennzeichnet, dass** sie Beförderungsmittel für leere zweite Behälter zur Zuführung zu jeder der identischen Behandlungsstationen (13) umfasst.

8. Anlage zum Behandeln von Geflügeltieren nach Anspruch 7,
**dadurch gekennzeichnet, dass** die Beförderungsmittel durch einen geneigten linearen Rollenförderer gebildet werden, der es ermöglicht, leere zweite Behälter durch Schwerkraft entlang seiner Bewegungsachse gleiten zu lassen.

9. Anlage zum Behandeln von Geflügeltieren nach einem der vorstehenden Ansprüche, **dadurch gekennzeichnet, dass** sie eine Vorrichtung zum Erkennen der Befüllung des Behälters umfasst, die Messsignale aussendet, die von einer Verarbeitungseinheit verarbeitet werden, wobei die Verarbeitungseinheit mit einer Alarmvorrichtung verbunden ist, um ein Befüllungsendesignal auszusenden und/oder einen Endlagenschalter zu bewegen, der am Ende der Rutsche (15) angeordnet ist, wobei die Bewegung des Schalters es der Rutsche (15) ermöglicht, ein entlang derselben gleitendes Geflügeltier zu einem anderen zweiten Behälter zu leiten.

10. Anlage zum Behandeln von Geflügeltieren nach dem vorstehenden Anspruch, **dadurch gekennzeichnet, dass** die Behandlungseinheit ein Signal sendet und/oder einen Endlagenschalter umschaltet, wenn die Befüllung des Behälters mindestens 90 %, und vorzugsweise mindestens 95 %, seines maximalen Fassungsvermögens erreicht.

11. Anlage zum Behandeln von Geflügeltieren nach einem der vorstehenden Ansprüche, **dadurch gekennzeichnet, dass** sie eine Vorrichtung zum Versprühen (18) mindestens eines Fluids umfasst, wobei die Sprühvorrichtung (18) am stromabwärtigen Ende des zweiten Förderers (17) angeordnet ist, um Fluidtröpfchen auf die frisch geschlüpften Geflügeltiere zu verteilen, die sich in zweiten Behältern bewegen, und dass sie ein System zum Kontrollieren der zweiten Behälter umfasst, die sich auf dem zweiten Förderer (17) bewegen, wobei das Kontrollsystem konfiguriert ist, um die Behandlung jeweils nur eines zweiten Behälters durch die Sprühvorrichtung (18) zu gewährleisten.

12. Anlage zum Behandeln von Geflügeltieren nach dem vorstehenden Anspruch, **dadurch gekennzeichnet, dass** das Kontrollsystem eine Steuereinheit und zwei Paare von Blockierern (19) umfasst, die durch Aktuatoren (20) betätigt werden, um zwei zweite Behälter zu bremsen, die unmittelbar benachbart auf dem zweiten Förderer (17) angeordnet und stromaufwärtig der Vorrichtung für die Versprühung (18) eines Fluids platziert sind.

13. Anlage zum Behandeln von Geflügeltieren nach Anspruch 11 oder 12, **dadurch gekennzeichnet, dass** die Sprühvorrichtung (18) eine Fluidversorgungskreis umfasst, der eine Spritze umfasst.

14. Anlage zum Behandeln von Geflügeltieren nach einem der Ansprüche 11 bis 13, **dadurch gekennzeichnet, dass** die Sprühvorrichtung (18) mindestens eine Sprühstation mit mehreren Sprühdüsen umfasst, wobei die Düsen jeder Station dazu angeordnet sind, um ein Fluid in Form von Tröpfchen auf die Oberfläche eines zweiten Behälters zu verteilen, der von dem zweiten Förderer (17) unter die Station befördert wird.

## Claims

1. Facility for high-speed processing of newly hatched poultry, said facility having an upstream end and a downstream end, said facility being intended to receive, at its upstream end, first containers wherein said newly hatched live poultry are placed,
- said facility comprising at least one first conveyor (10) for transporting said first containers, the first conveyors being strictly linear, said at least one first conveyor defining a conveying axis (11) along which a plurality of processing stations (13) are arranged, said at least one first conveyor (10) having an upstream end and a downstream end,
- at least some of said processing stations being identical so that the poultry of a single first container in motion between said upstream and downstream ends of said at least one first conveyor (10) can receive the same processing by being shared across the various identical processing stations (13),
- at least each one of said identical processing stations (13) comprising a chute (15) for transporting poultry thus processed from said corresponding processing stations to second containers (16),
said facility being **characterized in that:**
- said facility comprises stationary supports for supporting said second containers, which are arranged below said corresponding first conveyor (10), said supports also being placed level with or substantially level with a second conveyor (17) located under said corresponding first conveyor (10), so that each second container can be moved, when it is full, from its stationary support to said second conveyor (17) in order to be discharged, **and in that**
- said at least one first conveyor (10) transporting the poultry has a constant conveying speed of between 10 and 20 m/min depending on the desired rate.

2. Facility for processing poultry according to claim 1, **characterized in that** it comprises at least two first conveyors (10) arranged parallel to one another.

3. Facility for processing poultry according to claim 2, **characterized in that** said first conveyors are spaced apart by a distance such that said facility comprises a single second conveyor located under said first conveyors (10).

4. Facility for processing poultry according to any of claims 1 to 3, **characterized in that** the upstream end of said facility is intended to receive first containers comprising newly hatched poultry and debris to be sorted resulting from the hatching in order to allow the manual separation of these poultry and this debris.

5. Facility for processing poultry according to any of the preceding claims, **characterized in that** each of the identical processing stations (13) comprises a device for injecting at least one veterinary product into poultry and other similar birds.

6. Facility for processing poultry according to any of the preceding claims, **characterized in that** each chute (15) has an open upper end and a lower end shaped to define an intake with a gentle slope opening onto a second container placed on the stationary support thereof.

7. Facility for processing poultry according to any of the preceding claims, **characterized in that** it comprises means for transporting empty second containers to supply each of the identical processing stations (13).

8. Facility for processing poultry according to claim 7, **characterized in that** said transporting means consist of a linear inclined roller conveyor, which makes it possible to slide second empty containers along the movement axis thereof by gravity.

9. Facility for processing poultry according to any of the preceding claims, **characterized in that** it comprises a device for detecting the filling of the container, which transmits measurement signals that are processed by a processing unit, said processing unit being connected to an alarm device in order to transmit an end-of-filling signal and/or to move an end-of-travel flap placed at the end of the chute (15), the movement of said flap allowing said chute (15) to send a poultry bird sliding along the latter to a different second container.

10. Facility for processing poultry according to the preceding claim, **characterized in that** said processing unit sends a signal and/or pivots an end-of-travel flap when the filling of said container reaches at least 90%, and better still at least 95% of its maximum capacity.

11. Facility for processing poultry according to any of the preceding claims, **characterized in that** it comprises a device (18) for spraying at least one fluid, said spraying device (18) being placed at the downstream end of said second conveyor (17) for dispensing droplets of fluid onto the newly hatched poultry moving into second containers, **and in that** it comprises a system for managing the second containers in motion on said second conveyor (17), said management system being configured to guarantee the processing of a single second container at the same time by said spraying device (18).

12. Facility for processing poultry according to the preceding claim, **characterized in that** said management system comprises a control unit and two pairs of blockers (19) actuated by actuators (20) to brake two second containers immediately adjacent on said second conveyor (17) and placed upstream of said fluid spraying device (18).

13. Facility for processing poultry according to either claim 11 or claim 12, **characterized in that** said spraying device (18) comprises a fluid supply circuit comprising a syringe.

14. Facility for processing poultry according to any of claims 11 to 13, **characterized in that** said spraying device (18) comprises at least one spraying station comprising a plurality of spray nozzles, said nozzles of each station being arranged to dispense a fluid in the form of droplets toward the surface of a second container transported by said second conveyor (17) under said station.
